# EUROPEAN PATENT APPLICATION

(11) **EP 4 672 492 A1**
(43) Date of publication of application: **31.12.2025**
(21) Application number: 24221112.6
(22) Date of filing: 18.12.2024
(51) Int. Cl.: H01M 50/691, H01M 50/202, H01M 50/24, H01M 50/251

(54) **ENERGY STORAGE CONTAINER**

(30) Priority: 24.06.2024 CN 202421452718 U; 14.08.2024 WO PCT/CN2024/112003
(71) Applicant: Eve Energy Storage Co., Ltd, Wuhan, Hubei 430074 (CN)
(72) Inventor: JIANG, Min, Wuhan, Hubei, 430074 (CN); XU, Xiaowei, Wuhan, Hubei, 430074 (CN); WANG, Mengchun, Wuhan, Hubei, 430074 (CN); ZHANG, Kuibo, Wuhan, Hubei, 430074 (CN)
(74) Representative: Berggren Oy

(57) **Abstract**

The present application provides an energy storage container (1) including a box body (10) and one or more dehumidifiers (30), the box body (10) includes a top cover (11) and a bottom cover (12) arranged opposite relative to each other, and multiple battery clusters (20) are arranged inside the box body (10), wherein a length and width of each dehumidifier (30) are both greater than a thickness of the dehumidifier (30), and the dehumidifiers (30) are arranged between a bottom of the multiple battery clusters (20) and the bottom cover (12), and a thickness direction of the dehumidifiers (30) is aligned with a height direction of the box body (10).

## Description

### TECHNICAL FIELD

The present application relates to the field of energy storage technologies, and in particular, to an energy storage container.

### BACKGROUND

Energy storage containers are usually exposed to outdoors for operation. Due to humid environments, battery modules and other electrical equipment inside the energy storage containers are easily affected by moisture, affecting their normal operation, and even corroded, affecting their service life.

In related arts, a dehumidification scheme for a 20-foot 5MWH liquid cooling energy storage container involves the arrangement of 1 or 2 compressor air conditioners for dehumidification. Due to their large volume, the compressor air conditioners are usually directly fixed on side plates of the energy storage container, so that a considerable amount of space in both length and width directions of the energy storage container is occupied by the compressor air conditioners. Therefore, the use of large volume compressor air conditioners for dehumidification on the high-energy density energy storage container can lead to an oversized design of the container and uneven dehumidification effect.

### SUMMARY

Embodiments of the present application provide an energy storage container, including:
a box body including a top cover and a bottom cover arranged opposite to each other, multiple battery clusters being arranged inside the box body; and
one or more dehumidifiers, wherein a length of each dehumidifier and a width of each dehumidifier are both greater than a thickness of the dehumidifier, and the one or more dehumidifiers are arranged between a bottom of the multiple battery clusters and the bottom cover, and a thickness direction of the dehumidifier is aligned with a height direction of the box body.

According to the energy storage container in the present application, the dehumidifier is arranged in a gap between the bottom of the battery clusters and the bottom cover, and the thickness direction with a small size of the dehumidifier is arranged to be aligned with the height direction of the box body, so that a small space inside the box body is occupied by the dehumidifier as a whole, thereby the oversized design of the energy storage container due to the arrangement of the dehumidifier is effectively improved.

### BRIEF DESCRIPTION OF THE DRAWINGS

FIG. 1 is a perspective view of an energy storage container with a dehumidifier arranged therein according to an embodiment of the present application;
FIG. 2 is an enlarged view of a part of FIG. 1;
FIG. 3 is an enlarged view of a part of FIG. 2;
FIG. 4 is a schematic diagram of a structure inside a box body according to an embodiment of the present application;
FIG. 5 is an enlarged view of a part of FIG. 4;
FIG. 6 is a schematic top view of the energy storage container with a dehumidifier arranged therein according to an embodiment of the present application;
FIG. 7 is a schematic front view of the energy storage container with a dehumidifier arranged therein according to an embodiment of the present application;
FIG. 8 is a perspective view of the dehumidifier and its brackets according to an embodiment of the present application;
FIG. 9 is a front view of the dehumidifier according to an embodiment of the present application;
FIG. 10 is a top view of the dehumidifier according to an embodiment of the present application.

### Description of reference numerals:

1. energy storage container; 10. box body; 11. top cover; 12. bottom cover; 13. left side plate; 14. right side plate; 15. battery compartment; 16. liquid cooling chamber; 17. electrical chamber; 20. battery cluster; 21. battery module; 30. dehumidifier; 31. first dehumidifier group; 32. second dehumidifier group; 331. first bracket; 332. second bracket; 34. drainage channel; 341. first drainage channel; 342. second drainage channel; 35. drainage outlet; 36. water outlet; 37. drainage pipe; 40. high voltage box.

### DETAILED DESCRIPTION

In this application, unless otherwise stated, directional wordings such as "up" and "down" usually refer to the up and down directions of a device in actual use or working condition, in particular the plan directions in the accompanying drawings. The wordings "inside" and "outside" refer to directions with regard to an outline of the device.

Energy storage containers are usually exposed to outdoors for operation. Due to humid environments, battery modules and other electrical equipment inside the energy storage containers are easily affected by moisture, affecting their normal operation, and even corroded, affecting their service life.

In related arts, a dehumidification scheme for a 20-foot 5MWH liquid cooling energy storage container involves the arrangement of a compressor air conditioner or coil dehumidifier for dehumidification. Due to its large volume, the use of the compressor air conditioner on the high-energy density energy storage container can lead to an oversized design of the container and uneven dehumidification effect. The coil dehumidifier usually needs to be connected in series with pipelines of a liquid cooler, resulting in poor dehumidification effect of the coil dehumidifier at a low temperature, and the coil dehumidifier will lose its dehumidification ability when the liquid cooler is not in operation.

The compressor air conditioner or coil dehumidifier is usually directly fixed on side plates of a box body. Due to its large volume, a considerable amount of space in a length or width direction of the box body is occupied by the compressor air conditioner or coil dehumidifier, resulting in an oversized design of the energy storage container.

According to the embodiments of the present application, the arrangement scheme of the dehumidifier inside the energy storage container is improved, which is conducive to solving the technical problem of an oversized design of the energy storage container caused by the arrangement of the large-sized dehumidifier inside the energy storage container.

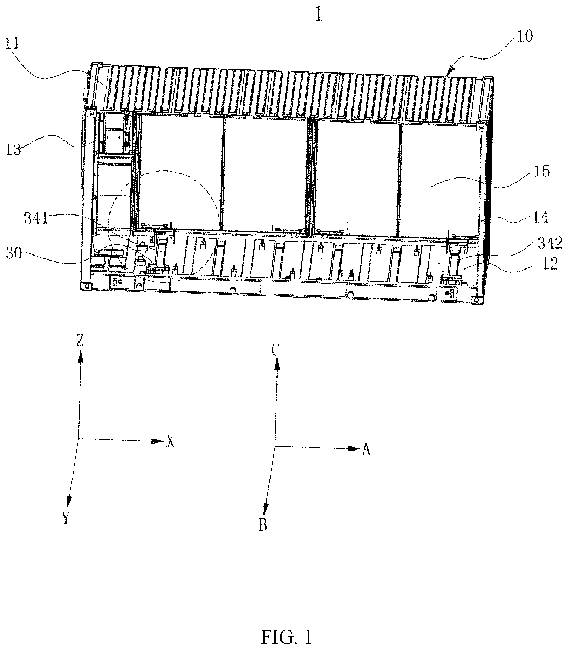

Referring to FIG. 1 to FIG. 5, according to an embodiment of the present application, an energy storage container 1 is provided. The energy storage container 1 includes a box body 10. The box body 10 includes a top cover 11 and a bottom cover 12 arranged opposite to each other. Multiple battery clusters 20 are arranged inside the box body 10, and at least one dehumidifier 30 is further arranged inside the box body 10. The box body 10 includes a length direction X, a width direction Y, and a height direction Z that are perpendicular to each other in pairs. The dehumidifier 30 includes a length direction A, a width direction B, and a thickness direction C that are perpendicular to each other in pairs. The dehumidifier 30 has a length extending along its length direction A, a width extending along its width direction B, and a thickness extending along its thickness direction C. The length and width of the dehumidifier 30 are both greater than the thickness of the dehumidifier 30. The dehumidifier 30 is arranged in a gap between a bottom of the multiple battery clusters 20 and the bottom cover 12, and the thickness direction of the dehumidifier 30 is aligned with the height direction of the box body 10.

The dehumidifier 30 is arranged in the gap between the bottom of the battery clusters 20 and the bottom cover 12, and the thickness direction with a small size of the dehumidifier 30 is aligned with the height direction of the box body 10, so that a space inside the box body 10 occupied by the dehumidifier 30 can be effectively reduced. On one hand, it enables more battery modules 21 to be arranged in a space in the height direction of the energy storage container 1, so that the space utilization efficiency of the energy storage container 1 in the height direction is increased. On the other hand, it is found that with the horizontal arrangement of the above-mentioned dehumidifier 30 inside the box body 10, the situation of an oversized design of the container caused by the arrangement of the large-sized dehumidifier 30 can be effectively reduced.

Referring further to FIG. 1 to FIG. 4, multiple dehumidifiers 30 are arranged at intervals inside the box body 10, and the multiple battery clusters 20 are arranged inside the box body 10. Each dehumidifier 30 is arranged for at least one battery cluster 20.

With the arrangement of the multiple dehumidifiers 30 inside the energy storage container 1, firstly, the volume of a single dehumidifier 30 is reduced, which is beneficial for further reducing the space occupied by the dehumidifiers 30 in the height direction of the box body 10; secondly, compared to the arrangement of large-sized dehumidifiers 30 inside the box body 10, the placement and arrangement of the multiple small-sized dehumidifiers 30 are more flexible; and thirdly, the multiple dehumidifiers 30 are arranged at intervals inside the box body 10, and at least one battery cluster 20 is arranged for each dehumidifier 30 , so that the multiple dehumidifiers 30 can be arranged at uniform intervals according to the arrangement of the multiple battery clusters 20, thereby the multiple dehumidifiers 30 provide uniform dehumidification effect inside the box body 10.

The battery clusters 20 are configured to include multiple battery modules 21 stacked along the height direction of the box body 10. The multiple battery modules 21 are connected in series, parallel, or series-parallel to form the battery clusters 20 with a certain voltage and capacity, thereby capacity design requirements of the energy storage container 1 are satisfied.

In order to enable the multiple dehumidifiers 30 to complete dehumidification within a required dehumidification time, it is found through trials that a number n of the dehumidifiers 30 arranged inside the box body 10 satisfies: n = 24 × Q × V/(t × C), where C is a dehumidification capacity of each dehumidifier, Q is an amount of water vapor contained in per kilogram of dry air inside the box body 10, V is an air volume inside the box body 10, and t is a dehumidification time.

Expressed in terms of 24-hour dehumidification capacity, the unit of C is set to be "ml/24h", and the dehumidification capacity C of the dehumidifier 30 suitable for use in the energy storage container 1 is set to be 500ml/24h to 1000ml/24h. In a specific embodiment, the dehumidification capacity of the dehumidifier 30 can be 500ml/24h, 600ml/24h, 700ml/24h, 800ml/24h, 900ml/24h, 1000ml/24h, and any value between any two of the above values, or a range between any two of the above values.

The unit of Q is set to be "g/kg dry air". Q is mainly affected by factors such as the temperature inside the box body 10 and relative environmental humidity, which is not limited thereto. It should be noted that the dehumidifier 30 is only started when the amount of water vapor contained in each kilogram of dry air inside the box body 10 is greater than a certain value. After the dehumidifier 30 is started for a certain period of time, the amount of water vapor contained in each kilogram of dry air inside the box body 10 is reduced to below the specified value.

The unit of V is "dm³". It should be noted that V represents the remaining space inside the box body 10 after subtracting the space occupied by the multiple battery clusters and other equipment inside the box body. The remaining space is filled with air.

The unit of t is set to be "h", and the dehumidification time t commonly used in the energy storage container 1 is required to be 1h to 4h. In a specific embodiment, the dehumidification time t for commonly used in the energy storage container 1 is set to be 1h, 2h, 4h, and any value between any two of the above values, or a range between any two of the above values.

Taking a 20-foot 5MWH liquid cooling energy storage container as an example, a ratio of the number n of the dehumidifiers arranged inside the box body to a number m of the battery clusters is not less than 1/3, where the dehumidification capacity C of each dehumidifier is set to be 500ml/24h to 1000ml/24h, and/or the dehumidification time t is set to be 1h to 4h.

It can be understood that in case that the ratio of the number n of the dehumidifiers arranged inside the energy storage container 1 to the number m of the battery clusters is less than 1/3, the dehumidification effect of the energy storage container 1 within the specified dehumidification time cannot be satisfied with the number n of the dehumidifiers arranged. In case that the internal space of the box body 10 is large enough, as many dehumidifiers 30 as possible are arranged inside box body 10, so that the dehumidification effect and efficiency of energy storage container 1 are further improved. For example, with the dehumidification capacity of the dehumidifiers 30 remaining constant, dehumidification can be completed within 4 hours with 4 dehumidifiers arranged inside the box body 10, and dehumidification can be completed within 1 hour with 16 dehumidifiers arranged inside the box body.

Furthermore, one dehumidifier group 30 or one dehumidifier 30 can be arranged for each battery cluster 20. One dehumidifier group 30 can include two or more dehumidifiers 30. The appropriate number of dehumidifiers 30 can be arranged inside the energy storage container 1 according to the humidity state of the environment required for the appliance of the energy storage container 1 and the dehumidification capacity of a single dehumidifier 30.

The 20-foot 5MWH liquid cooling energy storage container is currently the liquid cooling energy storage system with the highest volumetric energy ratio. Taking the 20-foot 5MWH liquid cooling energy storage container as an example, the number of the battery clusters 20 arranged inside the box body 10 is 10 to 12, and the number of the dehumidifiers 30 arranged inside the box body 10 is 4 to 12. In a specific embodiment, the number of the dehumidifiers 30 arranged inside the box body 10 can be 4, 5, 6, 7, 8, 9, 10, 11, or 12.

In a preferred embodiment, one dehumidifier 30 is arranged at the bottom of each battery cluster 20, which can achieve a uniform dehumidification effect. In case that the dehumidification performance of a single dehumidifier 30 is good and the dehumidification effect of the energy storage container 1 is sufficient, four dehumidifiers 30 can be arranged at four corners of the battery compartment 15 of the box body 10, so that a uniform dehumidification effect can be achieved in the entire box body 10.

As shown in FIG. 1 to FIG. 4, the box body 10 includes a top cover 11 and a bottom cover 12 arranged opposite to each other, and the multiple dehumidifiers 30 are arranged in a gap between the bottom of the multiple battery clusters 20 and the bottom cover 12.

The box body 10 also includes a left side plate 13, a right side plate 14, a front side plate, and a rear side plate connected between the top cover 11 and the bottom cover 12. The left side plate 13 and the right side plate 14 are arranged opposite to each other, and the front side plate and the rear side plate are arranged opposite to each other.

The multiple dehumidifiers 30 are arranged in the gap between the bottom of the multiple battery clusters 20 and the bottom cover 12, so that the condensed water produced in the dehumidifiers 30 during the dehumidification process is directly discharged through the bottom cover 12, thereby the dehumidification effect of the dehumidifiers 30 is improved. Compared to the case that the dehumidifiers 30 are arranged on any one of the left side plate 13, the right side plate 14, the front side plate, or the rear side plate, ends of the dehumidifiers 30 need to be connected to a complex drainage pipeline to discharge the condensed water, and thus an additional complex drainage pipeline needs to be arranged inside the box body 10, thereby increasing the complexity of the structure inside the energy storage container 1 and further decreasing the space occupied by the battery modules 21 inside the box body 10.

Referring further to FIG. 1 to FIG. 3, multiple drainage channels 34 are arranged at intervals on the bottom cover 12. The drainage channels 34 are formed through parts of the bottom cover 12 being recessed. A water outlet 36 is arranged for each dehumidifier 30, and the condensed water inside each dehumidifier 30 is discharged through the water outlet 36. The water outlet 36 of each dehumidifier 30 is arranged above the drainage channel 34, so that water inside the dehumidifier 30 can be directly discharged into the drainage channel 34.

The water outlets 36 of the dehumidifiers 30 are arranged corresponding to the drainage channels 34, so that the condensed water produced in the dehumidifiers 30 can directly enter the drainage channels 34, thereby the structure of the drainage pipeline is effectively simplified, the dehumidification efficiency is effectively increased, and the structure inside the energy storage container 1 is simplified.

It should be noted that in case that the dehumidifiers 30 are arranged above the drainage channels 34, the corresponding water outlets 36 of the dehumidifiers 30 are arranged on a main body of the dehumidifier 30. The water inside the dehumidifiers 30 can be directly discharged into the drainage channels 34 through their water outlets 36. In case that the dehumidifiers 30 are arranged close to the drainage channels 34, the dehumidifiers 30 each further include an outlet pipe, and a water outlet of the outlet pipe is arranged above the drainage channel 34, so that the water produced in the dehumidifiers 30 is discharged into the drainage channels 34.

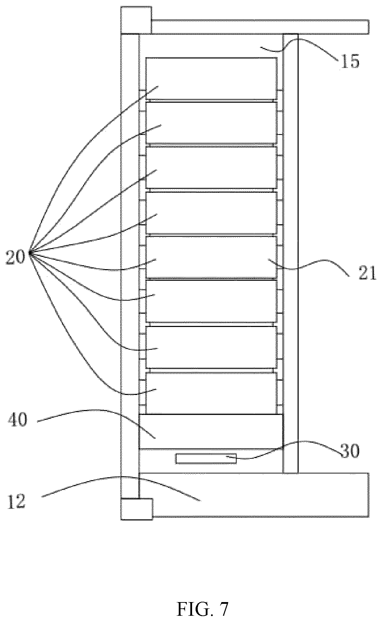

Continuing to refer to FIG. 1 to FIG. 4, FIG. 6, and FIG. 7, one drainage channel 34 is arranged for each battery cluster 20. The box body 10 includes a left side plate 13 and a right side plate 14 connected between the top cover 11 and the bottom cover 12. The drainage channels 34 include a first drainage channel 341 located close to the left side plate 13 and a second drainage channel 342 located close to the right side plate 14. The dehumidifiers 30 include a first dehumidifier group 31 and a second dehumidifier group 32 arranged at intervals. The first dehumidifier group 31 is arranged for the first drainage channel 341, and the second dehumidifier group 32 is arranged for the second drainage channel 342.

The first dehumidifier group 31 is arranged close to the left side plate 13 and the second dehumidifier group 32 is arranged close to the right side plate 14, so that moisture inside the entire box body 10 can be uniformly and quickly absorbed by the first dehumidifier group 31 and second dehumidifier group 32, thereby electrical equipment arranged close to the left side plate 13 or the right side plate 14 can be avoided from being corroded by moisture.

In a specific embodiment, twelve battery clusters 20 are arranged inside the energy storage container 1. Every six battery clusters 20 are arranged at intervals along a length direction of the box body 10, and every two battery clusters 20 are arranged at intervals along a width direction of the box body 10. Correspondingly, six drainage channels 34 are arranged on the bottom cover 12, and one drainage channel 34 is arranged for each battery cluster 20. The first dehumidifier group 31 includes two dehumidifiers 30, which are respectively located close to the front and rear side plates. The second dehumidifier group 32 includes two dehumidifiers 30, which are respectively located close to the front and rear side plates. Two drainage outlets 35 are arranged for each drainage channel 34, and a total of twelve drainage outlets 35 are configured for the six drainage channels 34. One battery cluster 20 is arranged for each drainage outlet 35.

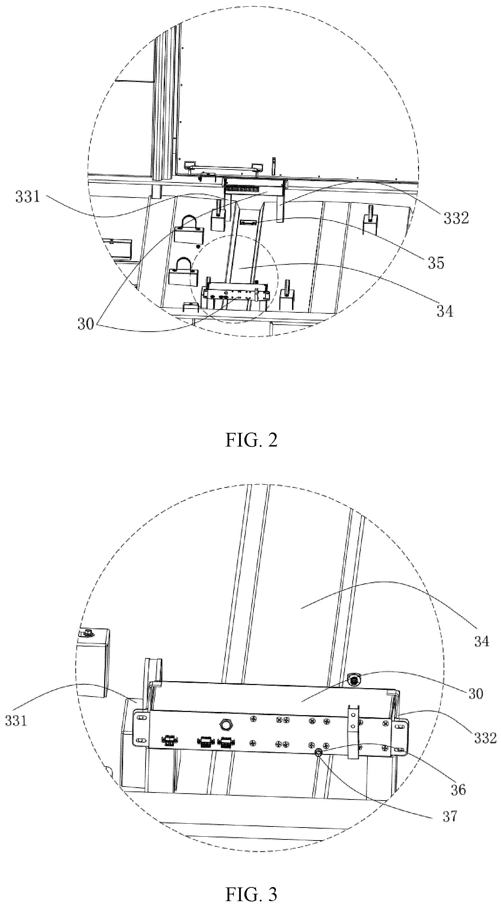

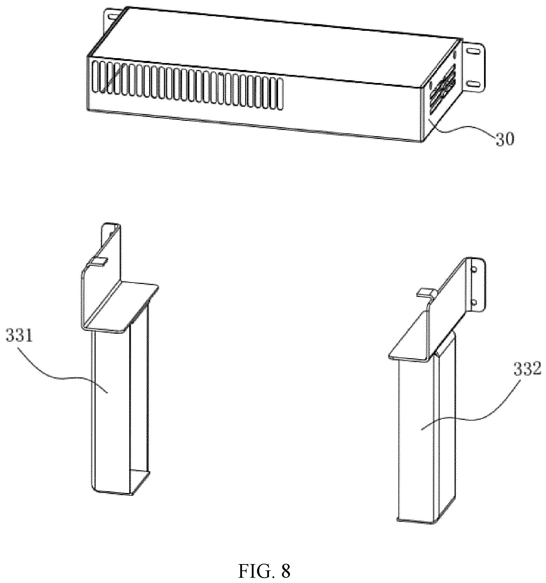

As shown in FIG. 3 and FIG. 8, two brackets are configured for each dehumidifier 30, that is, a first bracket 331 and a second bracket 332. Each dehumidifier 30 is fixed to the bottom cover 12 through the first bracket 331 and the second bracket 332. The first bracket 331 and the second bracket 332 are fixed on both sides of each drainage channel 34, so that the dehumidifier 30 is positioned directly towards the drainage channel 34.

Each dehumidifier mentioned above is installed on the bottom cover 12 by means of the first bracket 331 and the second bracket 332. One end of the first bracket 331 is fixed to one side of the dehumidifier 30, the other end of the first bracket 331 is fixed to the bottom cover 12 located on one side of the drainage channel 34. One end of the second bracket 332 is fixed to the other side of the dehumidifier 30, and the other end of the second bracket 332 is fixed to the bottom cover 12 located on the other side of the drainage channel 34, so that the dehumidifier 30 is arranged directly facing the drainage channel 34, which facilitates the direct discharge of the condensed liquid produced in the dehumidifier 30 during dehumidification into the drainage channel 34, thereby the need for additional drainage pipeline structure is eliminated, and the space inside the box body required for arranging the entire dehumidification system is effectively reduced.

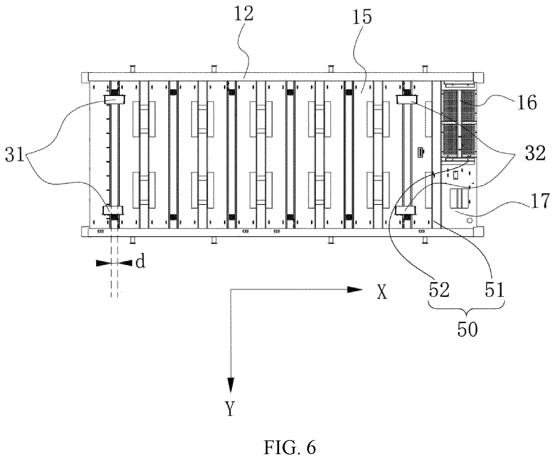

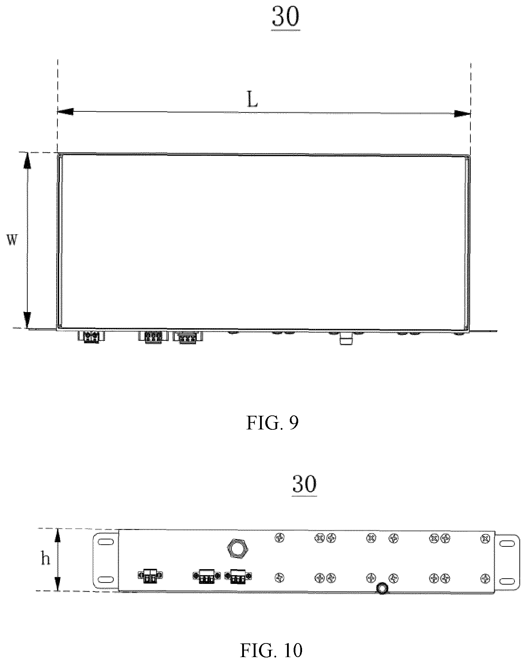

Referring further to FIG. 6 and FIG. 9, a length or width of each dehumidifier 30 is greater than a width of each drainage channel 34.

It should be noted that the length or width of the dehumidifier 30 is greater than the width d of the drainage channel 34, so that all condensed water flowing out from the bottom of the dehumidifier 30 can flow into the drainage channel 34.

In some embodiments, at least one drainage outlet 35 is arranged at the bottom of each drainage channel 34. A drainage pipe 37 is connected to the dehumidifier 30, and an end of the drainage pipe 37 extends to the drainage outlet 35.

In case that a distance between the outlet at the bottom of the dehumidifier 30 and the drainage channel 34 is large, a drainage pipe 37 can be connected to the outlet at the bottom of the dehumidifier 30. The drainage pipe 37 further guides the water produced in the dehumidifier 30 directly into the drainage outlet 35, thereby the drainage efficiency is increased.

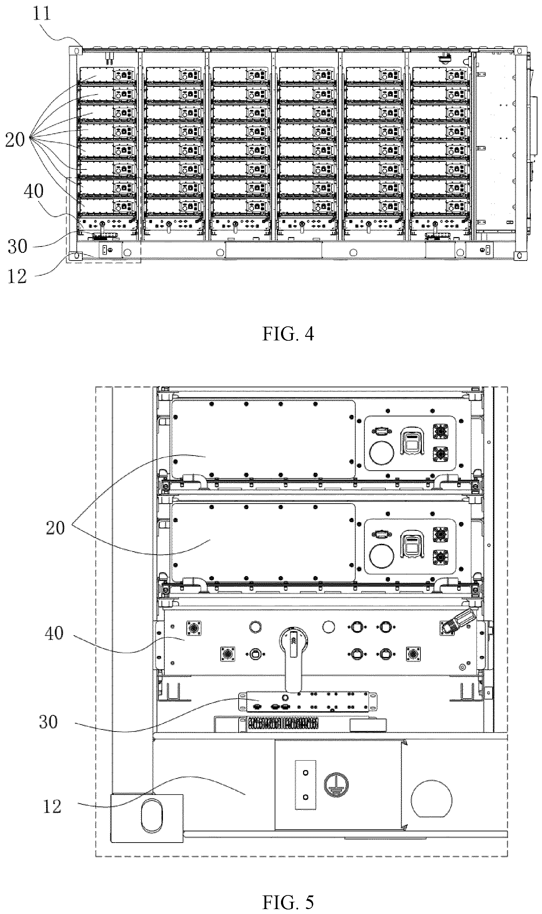

As shown in FIG. 4, FIG. 5, and FIG. 7, the energy storage container 1 further includes a high voltage box 40. The battery clusters 20, the high voltage box 40, and the dehumidifier 30 are arranged in sequence along the height direction of the box body 10.

In the energy storage container 1, the high voltage box 40 is designed as a box body 10 with a sealed structure for carrying and distributing high voltage electrical equipment. High voltage electrical equipment is installed inside the high voltage box 40. The high voltage electrical equipment is used to manage, distribute, and control the high voltage power in the energy storage container 1. The high voltage equipment includes a high voltage switchgear, a transformer, and a protective device, etc. A dehumidifier 30 is arranged at the bottom of the high voltage box 40, so that the unstable operation of the high voltage equipment inside the high voltage box 40 caused by moisture can be effectively prevented.

The battery clusters 20, the high voltage box 40, and the dehumidifier 30 are arranged in sequence along the height direction of the box body 10, so that the height space inside the box body 10 can be fully utilized. Moreover, a separate equipment compartment arranged along the length direction of the box body 10 for accommodating the high voltage box 40 and the dehumidifier 30 can be avoided, thereby the space utilization rate in the length direction of the box body 10 is increased.

It should be noted that the dehumidifiers 30 are arranged below the high voltage box 40, so that when fans inside the dehumidifiers 30 are running, heat generated by components inside the high voltage box 40 can be taken away, thereby rending the temperature inside the box body 10 more uniform.

Referring further to FIG. 9 and FIG. 10, the length of each dehumidifier 30 is set to be 200mm to 300mm; and/or, the width of each dehumidifier 30 is set to be 100mm to 200mm; and/or, the thickness of each dehumidifier 30 is set to be 20mm to 80mm.

Multiple dehumidifiers 30 can be set with the same size and specification. Alternately, some dehumidifiers 30 can be configured with one size and specification, while others can be configured with another size and specification, depending on the placement of the dehumidifiers 30. For example, in one of the examples, the size of each dehumidifier 30 is set to be 300mm × 130mm × 50mm.

The length L of each dehumidifier 30 can be set to be 200mm, 210mm, 220mm, 230mm, 240mm, 250mm, 260mm, 270mm, 280mm, 290mm, 300mm, as well as any value between any two of the above values or a range between any two of the above values. The width W of each dehumidifier 30 can be set to be 100mm, 110mm, 120mm, 130mm, 140mm, 150mm, 160mm, 170mm, 180mm, 190mm, 200mm, as well as any value between any two of the above values or a range between any two of the above values. The thickness h of each dehumidifier 30 can be set to be 20mm, 30mm, 40mm, 50mm, 60mm, 70mm, 80mm, as well as any value between any two of the above values or any range between any two of the above values.

Taking a 20-foot 5MWH liquid cooling energy storage container as an example, the energy storage container 1 includes a length extending along its length direction X, a width extending along its width direction Y, and a height extending along its height direction Z. The length of the energy storage container 1 is greater than its width, and the width of the energy storage container 1 is greater than its height. The multiple dehumidifiers 30 are arranged horizontally inside the box body 10. The length direction of each dehumidifier 30 is aligned with the length direction of the container, and the width direction of each dehumidifier 30 is aligned with the width direction of the container, and the thickness direction of each dehumidifier 30 is aligned with the height direction of the container. Multiple dehumidifiers are arranged at intervals along the length direction of the energy storage container 1. In case that the length of each dehumidifier 30 is greater than 300 mm, a large amount of space in the length direction of the box body 10 is occupied by the multiple dehumidifiers 30, which is adverse for keeping a sufficient spacing between adjacent dehumidifiers 30. In case that the length of each dehumidifier 30 is less than 200 mm, a single dehumidifier 30 is of a small volume under a limited thickness and width of the dehumidifier 30, which leads to insufficient dehumidification capacity of a single dehumidifier 30, and thus adversely affects the dehumidification function inside the energy storage container 1. Furthermore, multiple dehumidifiers 30 are arranged at intervals along the width direction of the energy storage container 1. In case that the width of each dehumidifier 30 is greater than 200 mm, a large amount of space in the width direction of the box body 10 is occupied by the multiple dehumidifiers 30, which is adverse for keeping a sufficient spacing between adjacent dehumidifiers 30. In case that the width of each dehumidifier 30 is less than 100 mm, a single dehumidifier 30 is of a small volume under a limited thickness and width of the dehumidifier, which leads to insufficient dehumidification capacity of a single dehumidifier 30, and thus adversely affects the dehumidification function inside the energy storage container 1. Multiple dehumidifiers 30 are arranged in a layer along the height direction of the energy storage container 1. In case that the thickness of each dehumidifier 30 is greater than 80 mm, a large amount of space in the height direction of the box body 10 is occupied by the dehumidifiers 30. In case that the thickness of each dehumidifier 30 is less than 20 mm, a single dehumidifier 30 is of a small volume under a limited thickness and width of the dehumidifier 30, which leads to insufficient dehumidification capacity of a single dehumidifier 30, and thus adversely affects the dehumidification function inside the energy storage container 1.

As shown in FIG. 1 and FIG. 6, a battery compartment 15, an electrical chamber 17, and a liquid cooling chamber 16 that are separated from each other are arranged in the box body 10. The battery compartment 15 is separated from the electrical chamber 17 or the liquid cooling chamber 16 along the length direction X of the box body 10. The electrical chamber 17 is separated from the liquid cooling chamber 16 along the width direction Y of the box body 10. The battery compartment 15 is configured to contain the multiple battery clusters 20, the electrical chamber 17 is configured to contain a combiner cabinet and/or a distribution cabinet, and the liquid cooling chamber 16 is configured to contain a liquid cooling equipment. The dehumidifiers 30 are arranged in an area where the battery compartment 15 is located.

The electrical chamber 17, the liquid cooling chamber 16, and the battery compartment 15 are separately arranged, so that the temperature and humidity of the electrical chamber 17, the liquid cooling chamber 16, and the battery compartment 15 can be controlled separately. On one hand, this is beneficial for maintaining a suitable working environment for the electrical equipment such as the combiner cabinet and the distribution cabinet inside the electrical chamber 17, thereby the stability and reliability of the electrical equipment such as the combiner cabinet and the distribution cabinet is improved. On the other hand, the temperature and humidity of the battery compartment 15 is controlled separately, the working environment of the battery clusters 20 can be controlled and its service life is extended.

In specific implementation, a partition plate 50 is arranged inside the box body 10. The partition plate 50 includes a longitudinal extension 51 and a transverse extension 52. The longitudinal extension 51 is configured to separate the battery compartment 15 from the electrical chamber 17 or the liquid cooling chamber 16, and the transverse extension 52 is configured to separate the electrical chamber 17 from the liquid cooling chamber 16.

## Claims

1. An energy storage container (1), comprising:
a box body (10) comprising a top cover (11) and a bottom cover (12) arranged opposite to each other, a plurality of battery clusters (20) being arranged inside the box body (10); and
one or more dehumidifiers (30), **characterized in that** a length and width of each of the dehumidifiers (30) are both greater than a thickness of each of the dehumidifiers (30), and the dehumidifiers (30) are arranged between a bottom of the plurality of battery clusters (20) and the bottom cover (12), and a thickness direction of the dehumidifiers (30) is aligned with a height direction of the box body (10).

2. The energy storage container (1) according to claim 1, wherein a plurality of dehumidifiers (30) are arranged at intervals inside the box body (10), and each of the dehumidifiers (30) is arranged for at least one of the battery clusters (20).

3. The energy storage container (1) according to claim 2, wherein a number n of the dehumidifiers (30) arranged inside the box body (10) satisfies n = 24 × Q × V/(t × C), where Q is an amount of water vapor contained in per kilogram of dry air inside the box body (10), V is an air volume inside the box body (10), t is a dehumidification time, and C is a dehumidification capacity of each of the dehumidifiers (30).

4. The energy storage container (1) according to claim 3, wherein a ratio of the number n of the dehumidifiers (30) arranged inside the box body (10) to the number m of the battery clusters (20) is not less than 1/3, the dehumidification capacity C of each of the dehumidifiers (30) is set to be 500 ml/24h to1000 ml/24h, and/or the dehumidification time t is set to be 1h to 4h.

5. The energy storage container (1) according to claim 2, wherein a plurality of drainage channels (34) are arranged at intervals on the bottom cover (12), a water outlet (36) is arranged on each of the dehumidifiers (30), and the water outlets (36) are arranged above the drainage channels (34).

6. The energy storage container (1) according to claim 5, wherein the drainage channels (34) are formed through parts of the bottom cover (12) being recessed.

7. The energy storage container (1) according to claim 5, wherein one of the drainage channels is arranged for each of the battery clusters (20); the box body (10) comprises a left side plate (13) and a right side plate (14) connected between the top cover (11) and the bottom cover (12); the drainage channels (34) comprise a first drainage channel (341) arranged close to the left side plate (13) and a second drainage channel (342) arranged close to the right side plate (14); the dehumidifiers (30) comprise a first dehumidifier group (31) and a second dehumidifier group (32) arranged at intervals, the first dehumidifier group (31) is arranged for the first drainage channel (341), and the second dehumidifier group (32) is arranged for the second drainage channel (342).

8. The energy storage container (1) according to claim 7, wherein the dehumidifiers (30) are arranged above the drainage channels (34), and the length or width of each of the dehumidifiers (30) is greater than a width of each of the drainage channels (34).

9. The energy storage container (1) according to claim 7, wherein at least one drainage outlet (35) is arranged at a bottom of each of the drainage channels (34), and a drainage pipe (37) is connected to each of the dehumidifiers (30), an end of the drainage pipe (37) extends to the drainage outlet (35).

10. The energy storage container (1) according to claim 7, further comprising first brackets (331) and second brackets (332), wherein the dehumidifiers (30) are fixed to the bottom cover (12) through the first brackets (331) and the second brackets (332), and the first brackets (331) and the second brackets (332) are fixed on both sides of the dehumidifiers (30).

11. The energy storage container (1) according to claim 10, wherein one end of each of the first brackets (331) is fixed to one side of each of the dehumidifiers (30), another end of each of the first brackets (331) is fixed to the bottom cover (12) located on one side of the drainage channels (34); and one end of each of the second brackets (332) is fixed to another side of each of the dehumidifiers (30), and another end of each of the second brackets (332) is fixed to the bottom cover (12) located on another side of the drainage channels (34).

12. The energy storage container (1) according to claim 1, wherein the battery clusters (20) are configured to include a plurality of battery modules (21) stacked along the height direction of the box body (10).

13. The energy storage container (1) according to claim 1, wherein twelve battery clusters (20) are arranged inside the energy storage container (1), every six battery clusters (20) are arranged at intervals along a length direction of the box body (10), and every two battery clusters (20) are arranged at intervals along a width direction of the box body (10).

14. The energy storage container (1) according to any one of claims 1 to 13, further comprising a high voltage box (40), wherein the battery clusters (20), the high voltage box (40), and the dehumidifiers (30) are arranged in sequence along the height direction of the box body (10).

15. The energy storage container (1) according to any one of claims 1 to 13, wherein a battery compartment (15), an electrical chamber (17), and a liquid cooling chamber (16) that are separated from each other are arranged in the box body (10); the battery compartment (15) is separated from the electrical chamber (17) or the liquid cooling chamber (16) along a length direction of the box body (10), and the electrical chamber (17) is separated from the liquid cooling chamber (16) along a width direction of the box body (10);
wherein a partition plate (50) is arranged inside the box body (10), the partition plate (50) comprises a longitudinal extension (51) and a transverse extension (52), the longitudinal extension (51) is configured to separate the battery compartment (15) from the electrical chamber (17) or the liquid cooling chamber (16), and the transverse extension (52) is configured to separate the electrical chamber (17) from the liquid cooling chamber (16).
